Europäisches Patentamt

European Patent Office

Office européen des brevets

(19)

(11) Veröffentlichungsnummer: **0 033 375**
**A2**

(12) **EUROPÄISCHE PATENTANMELDUNG**

(21) Anmeldenummer: **80107538.3**

(22) Anmeldetag: **03.12.80**

(51) Int. Cl.³: **G 02 B 21/00**

(30) Priorität: **30.01.80 DE 3003246**

(43) Veröffentlichungstag der Anmeldung:
**12.08.81 Patentblatt 81/32**

(84) Benannte Vertragsstaaten:
**AT BE CH DE FR IT LI NL SE**

(71) Anmelder: **GRUNDIG E.M.V. Elektro-Mechanische Versuchsanstalt Max Grundig**
**Kurgartenstrasse 37**
**D-8510 Fürth(DE)**

(72) Erfinder: **Rumland, Rainer, Ing. grad.**
**Irmgardstrasse 12**
**D-8501 Rosstal(DE)**

(74) Vertreter: **Voigt, Günter**
**Kurgartenstrasse 37**
**D-8510 Fürth(DE)**

(54) Operationsmikroskop mit Fernsehkamera.

(57) Die Erfindung bezieht sich auf ein Operationsmikroskop mit Fernsehkamera. Um dem Operierenden bei einer Scharfeinstellung des Mikroskops die Arbeit zu erleichtern, wurden bisher nur extrem leichte Fernsehkameras an das Operationsmikroskop adaptiert. Solche leichten Fernsehkameras haben jedoch im allgemeinen nur eine geringe Bildqualität.

Es wird daher vorgeschlagen, das Mikroskop (12) und die Kamera (10) durch einen in einem Teleskoprohr (16) verlaufenden telezentrischen Strahlengang zu verbinden. Das Teleskoprohr (16) ist an seinen Endpunkten gelenkig gelagert. In den Gelenkpunkten sind der Strahlenumlenkung dienende Prismen oder Spiegel (22, 23) angeordnet, die bei Verstellung des Teleskoprohrs (16) in seinen Gelenken in einem bestimmten Umfang direkt oder indirekt mit verstellbar sind.

EP 0 033 375 A2

- 4 -

# OPERATIONSMIKROSKOP MIT FERNSEHKAMERA

## Beschreibung

Die Erfindung bezieht sich auf ein Operationsmikroskop mit Fernsehkamera.

Wenn der von einem Mikroskop erfaßte Bildausschnitt auf einem Fernsehbildschirmgerät wiedergegeben werden soll, so ist es erforderlich, die Kamera unmittelbar an einen entsprechenden Bildausgang des Mikroskops zu adaptieren. Dabei wird die Bildinformation in einem Lichtteiler vorzugsweise im Verhältnis 1 : 1 für das Okular und für den Kameraadapter aufgeteilt. Die Scharfeinstellung zum Objekt hin wird vorzugsweise durch einen Parallel-Führungsschlitten mit Zahnstangenantrieb vorgenommen. An diesem Führungsschlitten ist dann das Mikroskop befestigt. Die ferner benötigte Fernsehkamera ist dabei fest mit dem Mikroskop verbunden. Aus diesem Grunde muß der Operierende bei einer Verstellung der Schärfe des Mikroskops nicht nur die Masse des Mikroskops, sondern auch die Masse der

- 5 -

Fernsehkamera mitverstellen. Während das Mikroskop ca.
2 kg wiegt, wiegt die zugehörige Fernsehkamera ca. 1 bis
5 kg. Die für den Operierenden entstehende Mehrbelastung
ist daher ganz erheblich und mit seiner feinfühligen
Operationstätigkeit praktisch unvereinbar.

Aus diesem Grunde wurden bisher nur extrem leichte Fernsehkameras an das Operationsmikroskop adaptiert. Solche
leichten Fernsehkameras haben jedoch im allgemeinen nur
eine geringe Bildqualität. Fernsehkameras höherer Bildqualität - insbesondere Drei-Röhren-Kameras - sind im
allgemeinen erheblich schwerer und werden daher von den
Operierenden in der beschriebenen Adaption nicht akzeptiert.

Eine Adaptionsmöglichkeit für schwerere Kameras ist bei
Verwendung einer Gliederoptik gegeben, die die optische
Verbindung zwischen dem Operationsmikroskop und der
Fernsehkamera herstellt. Es handelt sich dabei um eine
Gliederoptik, wie sie bereits seit einigen Jahren in der
Medizin - z. B. in der Endoskopie - verwendet wird. Diese
Gliederoptiken bestehen aus mehreren Rohrabschnitten, in
denen sich Mittel zur Erzeugung eines definierten Strahlenganges zwischen Eingang und Ausgang der Gliederoptik
befinden. Darüber hinaus sind auch Gelenke mit Umlenkprismen vorhanden. Eine solche Gliederoptik ist an sich
gut beweglich und damit für die Adaption zwischen einem
Operationsmikroskop und einer Fernsehkamera grundsätzlich geeignet. Nachteilig ist jedoch der recht komplizierte Strahlengang der Gliederoptik. Die häufigen Glas-Luft-Übergänge beeinflussen die Qualität des übertragenen Bildes - insbesondere bezüglich Auflösung und Kontrastübertragungsfunktion - im erheblichen Maße ungünstig., Darüber hinaus haben Gliederoptiken im allgemeinen nur einen geringen Querschnitt, so daß ein geringes Öffnungsverhältnis vorliegt und sehr lichtempfindliche Kameras benutzt werden müssen.

Der Erfindung liegt die Aufgabe zugrunde, ein Operationsmikroskop mit hochwertiger und damit relativ schwerer Fernsehkamera zu schaffen, das bei Scharfeinstellung des Operationsmikroskops zum Objekt hin nur einen geringen Kraftaufwand erfordert.

Die Lösung der Aufgabe erfolgt erfindungsgemäß durch die im kennzeichnenden Teil des Anspruchs 1 angegebenen Maßnahmen.

Vorteilhafte Weiterbildungen ergeben sich aus den Unteransprüchen.

Die Erfindung wird nachfolgend unter Bezugnahme auf die Zeichnungsfiguren beispielsweise erläutert. Es zeigen:

Fig. 1     ein verschwenk- und in zueinander senkrechten Längsrichtungen verschiebbares Operationsmikroskop in normaler Arbeitsposition und

Fig. 2          in verschwenkter Position sowie

Fig. 3 u. 4     prinzipielle Darstellungen eines
                Operationsmikroskops mit einer
                über einen telezentrischen Strah-
                lengang optisch angekoppelten
                Fernsehkamera.

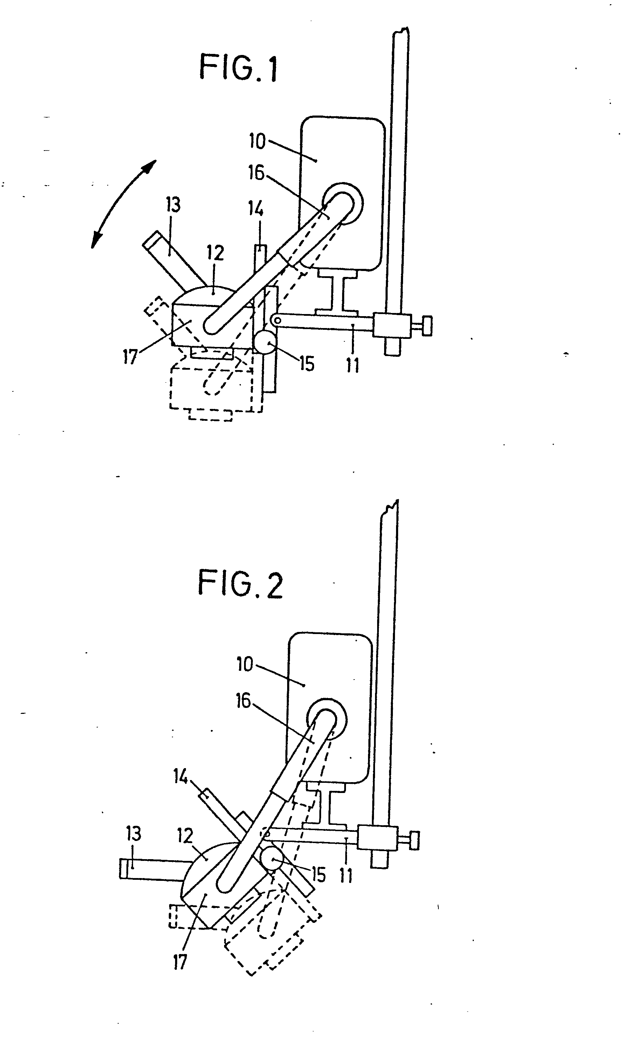

In Fig. 1 ist eine auf einem Trägerarm 11 fest angeordnete Fernsehkamera 10 dargestellt, die mit einem Okular
13 aufweisenden Operationsmikroskop 12 optisch verbunden ist, das über einen Schlitten 14 mit Zahnstangenantrieb auf dem Trägerarm 11 verstellbar angeordnet ist.
Der Zahnstangenantrieb wird durch ein Stellrad 15 betätigt. Über den Zahnstangenantrieb erfolgt die Scharfeinstellung des Mikroskops 12 zum Objekt hin. Ein Teleskoprohr 16 dient der optischen Ankopplung der Fernsehkamera 10 an das Operationsmikroskop 12. Der von der Fernsehkamera 10 genutzte Strahlengang wird über einen Lichtteiler 17 mit geeignetem Teilungsverhältnis - vorzugsweise mit dem Teilungsverhältnis 1 : 1 - dem Strahlengang
des Mikroskops 12 entnommen. Bei einer Veränderung der
Position des Mikroskops 12 (gestrichelte Darstellung)
verändert sich zwangsläufig auch die Stellung des Teleskoprohrs 16 sowie seine wirksame Länge. Dies macht normalerweise eine erneute Scharfeinstellung der Fernsehkamera 10 erforderlich, was jedoch bei einer Operation zu
zeitraubend und sehr störend ist. Entsprechendes gilt auch, wenn das Operationsmikroskop 12 gemäß Darstellung
in Fig. 2 verschwenkt oder verstellt und verschwenkt wird.

Wegen des vorliegend vorgesehenen telezentrischen Strahlengangs im Teleskoprohr 16 haben die Längenänderungen in
diesem Bereich auf die Scharfeinstellung der Fernsehkamera 10 keinerlei Einfluß. Die relativ schwere Kamera 10
muß nicht mehr bewegt werden und kann in der einmal vorgegebenen Position verbleiben. Nur der relativ leichte
Mikroskop-Kopf ist zu verstellen. Die Erleichterung für
den Operierenden ist damit ganz erheblich. Er ist nicht
mehr gezwungen, die relativ schwere Fernsehkamera mitzuverstellen, was mit seiner feinfühligen Operationstätigkeit auch nicht in Einklang zu bringen wäre.

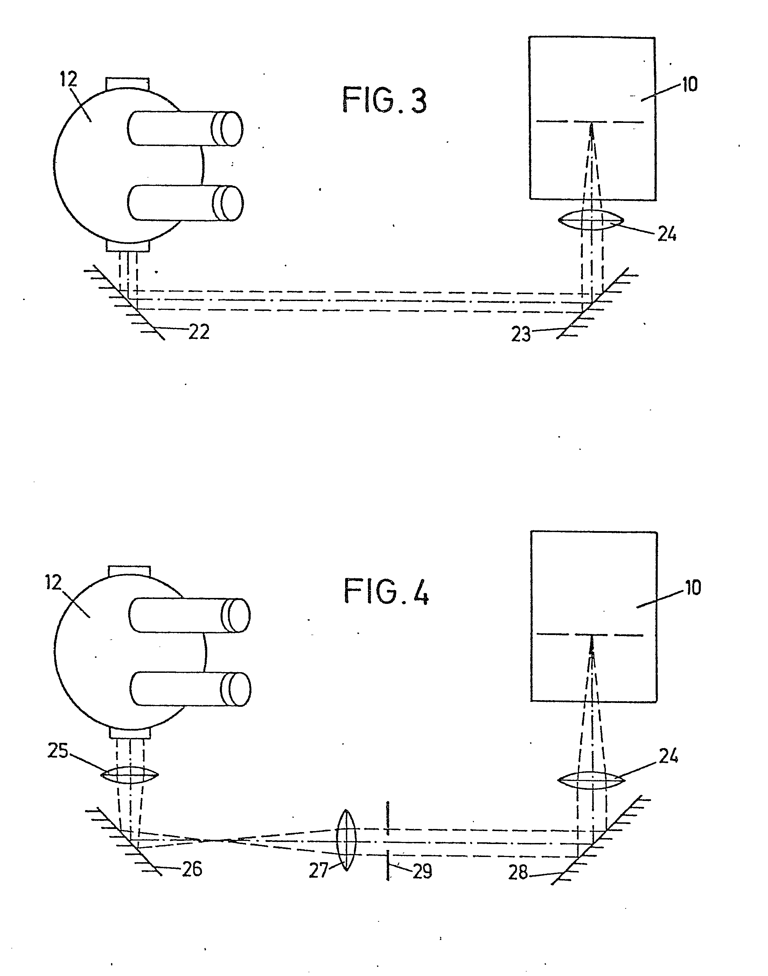

In Fig. 3 ist ein grundsätzlicher Verlauf des als optische
Kopplung zwischen dem Operationsmikroskop 12 und der Fernsehkamera 10 verwendeten telezentrischen Strahlenganges
dargestellt. Sofern der aus dem Operationsmikroskop 12
auftretende Strahlengang bereits telezentrisch ist, wird
er mittels Umlenkmittel 22 und 23 in das Teleskoprohr 16
ein- bzw. von dort ausgeleitet und der Objektivlinse 24
der Fernsehkamera 10 zugeführt. Zweckmäßigerweise wird der
Ausgang des Strahlenganges des Operationsmikroskops 12
über einen ersten Spiegel 22 um $90^o$ umgelenkt und dann am
Ende des Teleskoprohrs 16 in dessen Gelenkpunkt über einen
zweiten Spiegel 23 wiederum um $90^o$ umgelenkt und mittels
einer Optik in der Fernsehkamera 10 scharf abgebildet.

Die Länge des Strahlenganges zwischen den Spiegeln 22
und 23 kann in weiten Grenzen verändert werden, ohne daß
sich an der Schärfe des in der Fernsehkamera 10 abgebildeten Bildes etwas ändert.

Da die meisten Operationsmikroskope 12 an ihrem optischen
Ausgang keinen telezentrischen Strahlengang liefern oder
die Abbildungsverhältnisse für das jeweilige Kamerabildformat nicht geeignet sind, empfiehlt sich die Verwendung
eines in Fig. 4 dargestellten Strahlenganges, der optimal
an die jeweiligen Bedingungen angepaßt werden kann. Der
Ausgang des Strahlenganges des Operationsmikroskops 12
wird über ein erstes Objektiv 25 geführt und mittels eines
ersten Spiegels 26 umgelenkt und dann virtuell abgebildet.
Mittels eines weiteren Objektivs 27 wird der Strahlengang
telezentrisch gestaltet und über einen weiteren Spiegel 28
und das Objektiv 24 der Fernsehkamera 10 der lichtempfindlichen Schicht der Fernseh-Aufnahmeröhre zugeführt.

Bei der erfindungsgemäßen Anordnung kann in weiten Grenzen
jeder beliebige Abbildungsmaßstab festgelegt werden. Da
bei mikroskopischen Betrachtungen im allgemeinen ein im
wesentlichen kreisrunder Bildausschnitt vorhanden ist,
spielen Verdrehungen des Mikroskops um eine zur Beobachtungsfläche senkrechte Achse praktisch keine Rolle. Der
telezentrische Bereich kann verkürzt oder verlängert werden, ohne daß sich Änderungen in der Bildschärfe ergeben.
Wenn über das Okular des Operationsmikroskops 12 ein scharfes Bild aufgenommen wird, wird dieses Bild gleichzeitig scharf als Fernsehbild oder Filmbild wiedergegeben.

Zur optimalen Aussteuerung, d. h. zur Lichtmengensteuerung,
kann vorteilhafterweise im telezentrischen Bereich des
Strahlenganges eine Irisblende 29 vorgesehen werden.

# OPERATIONSMIKROSKOP MIT FERNSEHKAMERA

## Patentansprüche

1. Operationsmikroskop mit Fernsehkamera, d a - d u r c h   g e k e n n z e i c h n e t , daß Mikroskop (12) und Kamera (10) durch einen in einem Teleskoprohr (16) verlaufenden telezentrischen Strahlengang verbunden sind, daß das Teleskoprohr (16) an seinen Endpunkten gelenkig gelagert ist und daß in den Gelenkpunkten der Strahlenumlenkung dienende Prismen oder Spiegel (22, 23) angeordnet sind, die bei Verstellung des Teleskoprohrs (16) in seinen Gelenken in einem bestimmten Umfang direkt oder indirekt mitverstellbar sind.

2. Operationsmikroskop mit Fernsehkamera nach Anspruch 1, d a d u r c h   g e k e n n z e i c h n e t , daß das Teleskoprohr (16) an seinen Enden allseits verschwenkbare Gelenke aufweist.

- 2 -

3. Operationsmikroskop mit Fernsehkamera nach einem der Ansprüche 1 oder 2, d a d u r c h g e k e n n - z e i c h n e t , daß die Fernsehkamera (10) mit einem Trägerarm (11) fest verbunden und lediglich das Mikroskop (12) über Zahnstangentrieb zum Zwecke der Scharfeinstellung zum Objekt hin verstellbar ist.

4. Operationsmikroskop mit Fernsehkamera nach einem der Ansprüche 1 bis 3, d a d u r c h g e k e n n - z e i c h n e t , daß das Mikroskop (12) einen Lichtteiler (17) mit geeignetem Teilungsverhältnis aufweist.

5. Operationsmikroskop mit Fernsehkamera nach einem der Ansprüche 1 bis 4, d a d u r c h g e k e n n - z e i c h n e t , daß die der Strahlenumlenkung dienenden Prismen oder Spiegel (22, 23) bei Verstellung des Teleskoprohrs (16) in den Gelenkpunkten in einem vorgegebenen Umfang mitverstellbar sind.

6. Operationsmikroskop nach einem der Ansprüche 1 bis 5, d a d u r c h g e k e n n z e i c h n e t , daß eine der Erzeugung eines virtuellen Bildes dienende Sammellinse (25) am Ausgang des Mikroskops (12) angeodnet ist, daß in Strahlenrichtung nach dem virtuellen Bild eine die divergierenden Strahlen weitgehend parallel ausrichtende Sammellinse (27) und am Ende des telezentrischen Strahlengangs eine die Strahlen wieder konzentriegende weitere Sammellinse (24) vorhanden sind.

7. Operationsmikroskop mit Fernsehkamera nach einem der Ansprüche 1 bis 6, d a d u r c h  g e k e n n - z e i c h n e t ,  daß im telezentrischen Strahlengang eine der Lichtmengensteuerung dienende Irisblende (29) vorhanden ist.

- 4 -                      Beschreibung:

## FIG.1

## FIG.2

FIG.3

FIG.4